(19) Europäisches Patentamt
European Patent Office
Office européen des brevets

(11) Veröffentlichungsnummer: **0 080 094**
**B1**

(12) **EUROPÄISCHE PATENTSCHRIFT**

(45) Veröffentlichungstag der Patentschrift: **17.04.85**

(51) Int. Cl.⁴: **C 09 B 62/032**, D 06 P 3/66, D 06 P 3/10

(21) Anmeldenummer: **82110255.5**

(22) Anmeldetag: **06.11.82**

(54) **Kupferhaltige Bisazoreaktivfarbstoffe, Verfahren zu ihrer Herstellung und ihre Verwendung zum Färben und Bedrucken von hydroxyl- und/oder stickstoffhaltigen Materialien.**

(30) Priorität: **19.11.81 DE 3145728**

(43) Veröffentlichungstag der Anmeldung: **01.06.83 Patentblatt 83/22**

(45) Bekanntmachung des Hinweises auf die Patenterteilung: **17.04.85 Patentblatt 85/16**

(84) Benannte Vertragsstaaten: **CH DE FR GB IT LI**

(56) Entgegenhaltungen:
**DE - A - 1 419 829**
**FR - A - 2 428 664**
**GB - A - 1 101 750**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Henk, Hermann, Dr., Roggendorfstrasse 55, D-5000 Köln 80 (DE)**

**EP 0 080 094 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Reaktivfarbstoffe der allgemeinen Formel

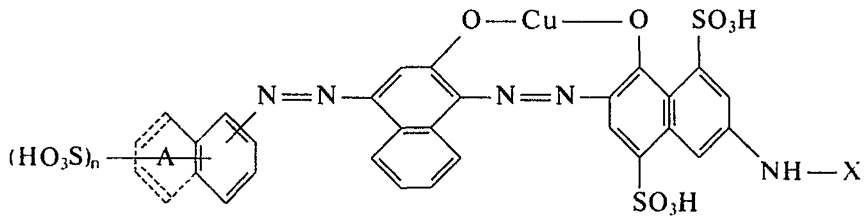

(I)

worin

X für den Rest eines gegebenenfalls weiter substituierten faserreaktiven Fluorheterocyclus steht,
n 1, 2 oder 3 ist

und der Benzol- bzw. Naphthalinkern A weitere Substituenten tragen kann.

Bevorzugt sind Farbstoffe der allgemeinen Formel

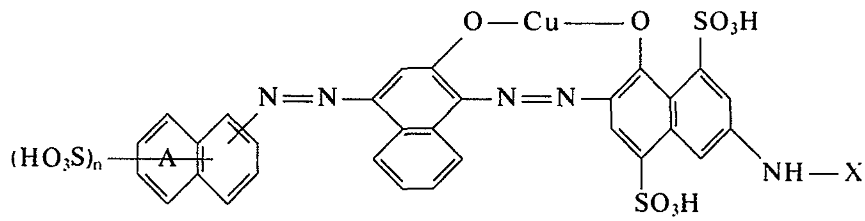

(II)

worin

X die oben genannte Bedeutung hat und
n 2 oder 3 ist.

Der Naphthalinrest A kann die Azobrücke in 1- oder 2-Stellung tragen und ferner vorzugsweise durch $C_1$—$C_4$-Alkoxy oder Hydroxy substituiert sein.

Bevorzugt sind ferner Farbstoffe der allgemeinen Formel

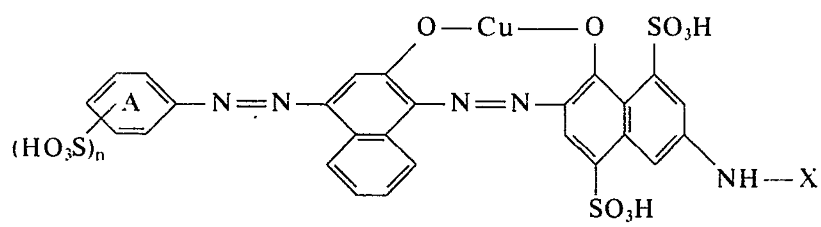

(III)

worin

X die oben genannte Bedeutung hat und
n 1 oder 2 ist.

Der Benzolrest A kann außer durch eine bis zwei Sulfonsäuregruppen beispielsweise auch durch Aminosulfonyl, Carboxy, Aminocarbonyl, $C_1$—$C_4$-Alkoxycarbonyl, $C_1$—$C_4$-Alkyl, $C_1$—$C_4$-Alkoxy, Halogen — insbesondere Chlor, $C_1$—$C_4$-Alkylcarbonylamino, Benzoylamino, gegebenenfalls substituierte Phenyl-, Phenylazo- oder Naphthylazo- oder gegebenenfalls substituierte 2-Benzothiazolylgruppen weiter substituiert sein. Als Substituenten der letztgenannten Phenyl-, Phenylazo-, Naphthylazo- und 2-Benzothiazolylgruppen kommen vorzugsweise in Frage:

Halogen, insbesondere Chlor, $SO_3H$, COOH, OH, Alkyl ($C_1$—$C_4$), Alkoxy ($C_1$—$C_4$).

Geeignete Reste X sind insbesondere solche von 5- oder 6gliedrigen Heterocyclen mit einem oder mehreren Stickstoffatomen und gegebenenfalls ankondensierten 5- oder 6gliedrigen carbocyclischen Ringen sowie mindestens einem unter Färbebedingungen abspaltbaren Fluoratom.

Beispielhaft seien genannt:

Pyridin-, Pyrimidin-, Triazin-, Chinolin-, Phenanthridinreste.

Geeignete Reste dieser Art sind beispielsweise in den britischen Patentschriften GB 1 526 840, GB 1 169 254, GB 1 188 606 beschrieben.
Im einzelnen seien genannt:

2-Amino-4-fluor-triazinyl-6,
2-Methylamino-4-fluor-triazinyl-6-,
2-Ethylamino-4-fluor-triazinyl-6,
2-iso-Propylamino-4-fluor-triazinyl-6,
2-Dimethylamino-4-fluor-triazinyl-6,
2-Diethylamino-4-fluor-triazinyl-6,
2-β-Methoxy-ethylamino-4-fluor-triazinyl-6,
2-β-Hydroxyethylamino-4-fluor-triazinyl-6,
2-Di-(β-hydroxyethylamino)-4-fluor-triazinyl-6,
2-β-Sulfoethylamino-4-fluor-triazinyl-6,
2-β-Sulfoethyl-methylamino-4-fluor-triazinyl-6,
2-β-Carboxymethylamino-4-fluor-triazinyl-6,
2-β-Cyanethylamino-4-fluor-triazinyl-6,
2-Benzylamino-4-fluor-triazinyl-6,
2-β-Phenylethylamino-4-fluor-triazinyl-6,
2-Benzyl-methylamino-4-fluor-triazinyl-6,
2-(Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2')-amino-4-fluor-triazinyl-6,
2-(4',8'-Disulfonaphthyl-(2'))-amino-4-fluor-triazinyl-6,
2-(6',8'-Disulfonaphthyl-(2')-amino-4-fluor-triazinyl-6,
2-(N-Methylphenyl)-amino-4-fluor-triazinyl-6,
2-(N-ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-fluor-triazinyl-6,
2(3',6',8'-Trisulfonaphthyl-(2'))-4-fluor-triazinyl-6,
2(3',6'-Disulfonaphthyl-(1')-4-fluor-triazinyl-6,
2-Fluor-4-pyridinyl-, 2,6-Difluor-4-pyrimidinyl-,
2,6-Difluor-5-chlor-4-pyrimidinyl, 2-Fluor-5,6-dichlor-4-pyrimidinyl-,
2,6-Difluor-5-methyl-4-pyrimidinyl-, 2,5-Difluor-6-methyl-4-pyrimidinyl-,
2-Fluor-5-methyl-6-chlor-4-pyrimidinyl-, 5-Brom-2-fluor-4-pyrimidinyl-,
2-Fluor-5-cyan-4-pyrimidinyl-, 2-Fluor-5-methyl-4-pyrimidinyl-,
2,5,6-Trifluor-4-pyrimidinyl-, 5-Chlor-6-chlormethyl-2-fluor-4-pyrimidinyl-,
2,6-Difluor-5-brom-4-pyrimidinyl-, 2-Fluor-5-brom-6-methyl-4-pyrimidinyl-,
2-Fluor-5-brom-6-chlormethyl-4-pyrimidinyl-, 2,6-Difluor-5-chlormethyl-4-pyrimidinyl-,
2,6-Difluor-5-nitro-4-pyrimidinyl-, 2-Fluor-6-methyl-4-pyrimidinyl-,
2-Fluor-5-chlor-6-methyl-4-pyrimidinyl-, 2-Fluor-5-chlor-4-pyrimidinyl-,
2-Fluor-6-chlor-4-pyrimidinyl-, 6-Trifluormethyl-5-chlor-2-fluor-4-pyrimidinyl-,
6-Trifluormethyl-2-fluor-4-pyrimidinyl-, 2-Fluor-5-nitro-4-pyrimidinyl-,
2-Fluor-5-trifluor-methyl-4-pyrimidinyl-,
2-Fluor-5-phenyl- oder -5-methyl-sulfonyl-4-pyrimidinyl-,
2-Fluor-4-carbonamido-4-pyrimidinyl-, 2-Fluor-5-carbomethoxy-4-pyrimidinyl-,
2-Fluor-5-brom-6-trifluormethyl-4-pyrimidinyl-, 2-Fluor-6-carbonamido-4-pyrimidinyl-,
2-Fluor-6-carbomethoxy-4-pyrimidinyl-, 2-Fluor-6-phenyl-4-pyrimidinyl-,

2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl.

Es sind Farbstoffe der Formeln (I) bis (III) bevorzugt, worin X folgende Bedeutung hat: (siehe dazu die folgenden Strukturen (IV) bis (VII):

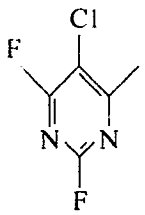
(IV)

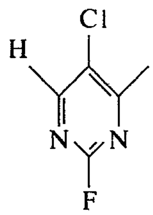
(V)

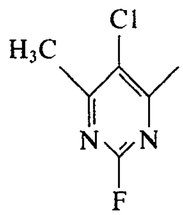
(VI)

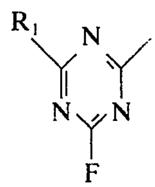
(VIII)

wobei $R_1$ für einen Substituenten steht.

Geeignete Substituenten $R_1$ sind beispielsweise Aminogruppen wie

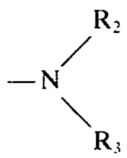

oder Gruppen der Formeln $-OR_4$ oder $-SR_4$, worin

$R_2$ und $R_3$ unabhängig voneinander Wasserstoff, Amino, $C_1$—$C_4$-Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, (insbesondere einen 5- oder 6gliedrigen Ring),

$R_4$ für Wasserstoff, $C_1$—$C_4$-Alkyl, Aryl oder Aralkyl steht.

Die Alkyl-, Aryl- oder Aralkylreste $R_2$, $R_3$ und $R_4$ können in der Farbstoffchemie übliche Substituenten aufweisen, wie z. B. $SO_3H$, OH, $NH_2$, Alkoxy ($C_1$—$C_4$), COOH, Halogen (insbesondere Cl).

Die Alkylreste $R_2$, $R_3$ und $R_4$ besitzen bevorzugt 1 bis 4 Kohlenstoffatome. Die Arylreste $R_2$, $R_3$ und $R_4$ stehen bevorzugt für Phenyl oder Naphthyl, Aralkyl $R_2$, $R_3$ und $R_4$ steht vorzugsweise für Alkyl ($C_1$—$C_4$), welches durch Phenyl oder Naphthyl substituiert ist.

Die Erfindung betrifft weiterhin ein Verfahren zur Herstellung von Farbstoffen der Formel (I).

Verbindungen der Formel (I) werden beispielsweise wie folgt hergestellt:

Ein Aminobenzol bzw. ein Aminonaphthalin der Formel

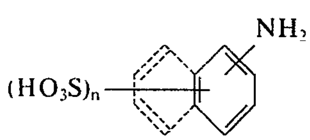
(VIII)

worin

n die unter Formel (I) genannte Bedeutung hat,

wird diazotiert und auf 1-Naphthylamin zu einer Verbindung der Formel

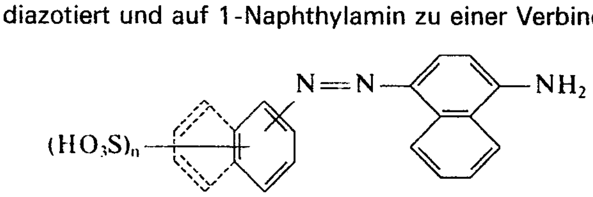
(IX)

im sauren Medium gekuppelt.

Verbindung (IX) wird weiterdiazotiert und auf eine Verbindung der Formel

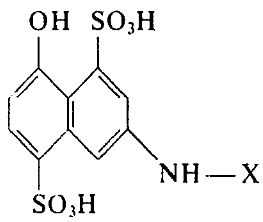

(X)

worin

X die unter Formel (I) genannte Bedeutung hat – im neutralen bis schwach alkalischen Medium zu einer Verbindung der Formel

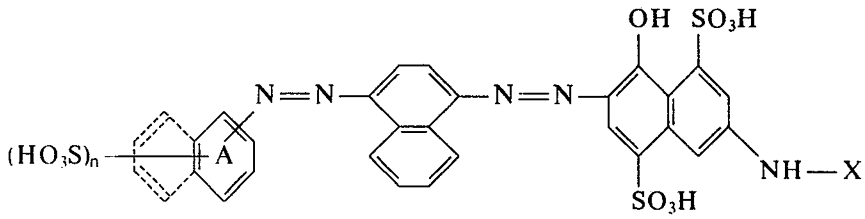

(XI)

gekuppelt.

Nach oxydativer Kupferung erhält man Farbstoffe der Formel (I).

Als diazotierbare Aminobenzole bzw. Aminonaphthaline der Formel (VIII) seien beispielsweise genannt:

1-Aminobenzol-2-, -3- oder 4-sulfonsäure,
1-Aminobenzol-2,4-, -2,5- oder -3,5-disulfonsäure,
1-Amino-4-methylbenzol-2-sulfonsäure,
1-Amino-3-methylbenzol-6-sulfonsäure,
1-Amino-6-methylbenzol-3- oder -4-sulfonsäure,
1-Amino-4-methylbenzol-3-sulfonsäure,
1-Amino-2-methylbenzol-3-sulfonsäure,
1-Amino-2,4-dimethylbenzol-6-sulfonsäure,
1-Amino-4- oder -5-chlorbenzol-2-sulfonsäure,
1-Amino-6-chlorbenzol-3- oder -4-sulfonsäure,
1-Amino-4-chlorbenzol-3-sulfonsäure,
1-Amino-2,4-dichlorbenzol-6-sulfonsäure,
1-Amino-2,5-dichlorbenzol-4-sulfonsäure,
1-Amino-5-methyl-4-chlorbenzol-2-sulfonsäure,
1-Amino-2-methyl-4-chlorbenzol-2-sulfonsäure,
1-Amino-2-methyl-6-chlorbenzol-4-sulfonsäure,
1-Amino-4- oder -5-methoxybenzol-2-sulfonsäure,
1-Amino-6-methoxybenzol-3- oder -4-sulfonsäure,
1-Amino-6-ethoxybenzol-3- oder -4-sulfonsäure,
1-Amino-2,4-dimethoxybenzol-6-sulfonsäure,
1-Amino-2,5-dimethoxybenzol-4-sulfonsäure,
1-Amino-3-acetylaminobenzol-6-sulfonsäure,
1-Amino-4-acetylaminobenzol-2-sulfonsäure,
1-Amino-3-acetylamino-4-methylbenzol-6-sulfonsäure,
1-Amino-4-methoxybenzol-2,5-disulfonsäure,
1-Amino-4-methyl-2,5-disulfonsäure,
1-Amino-2-carboxy-4- oder -5-sulfonsäure,
1-Aminonaphthalin-2-, -3-, -4-, -5-, -6-, -7- oder -8-sulfonsäure,
2-Aminonaphthalin-1-, -5-, -6-, -7- oder -8-sulfonsäure,
1-Amino-naphthalin-2,4-, -3,6-, -3,7-, -3,8-, -4,6-, -4,7-, -4,8-, -5,7- oder -6,8-disulfonsäure,
2-Aminonaphthalin-1,5-, -3,6-, -3,7-, -4,8-, -5,7- oder 6,8-disulfonsäure,
1-Aminonaphthalin-2,4,6-, 2,4,7-, -3,6,8- oder -4,6,8-trisulfonsäure,
2-Aminonaphthalin-1,5,7-, -3,6,8- oder -4,6,8-trisulfonsäure,
2-(4-Amino-3-sulfophenyl)-6-methyl-7-benzothiazol-sulfonsäure,
4-Aminoazobenzol-3,4'-disulfonsäure.

Die Herstellung der erfindungsgemäßen Farbstoffe und Farbstoffzwischenprodukte erfolgt vorzugsweise in wäßrigem Medium.

Die Erfindung betrifft schließlich die Verwendung der Farbstoffe der Formel (I) zum Färben von

hydroxyl- und/oder stickstoffhaltiger Materialien.

Die erfindungsgemäßen Farbstoffe eignen sich insbesondere zum Färben und Bedrucken von Wolle, insbesondere Polyamid und Leder, Zellwolle, regenerierter Cellulose, vor allem aber Baumwolle.

Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

Die erfindungsgemäßen Farbstoffe besitzen sehr gute Licht- und Naßechtheiten und zeichnen sich durch eine sehr hohe Baderschöpfung der Färbeflotte aus.

Gegenüber nächstvergleichbaren, aus DE-A 1 419 829 und FR-A 2 428 664 bekannten Farbstoffen zeichnen sie sich durch eine bessere Wasch- und Lichtechtheit aus.

Beispiel 1

37,4 Teile Anilin-2,5-disulfonsäure werden in 250 Teilen Wasser und 20 Teilen einer 30%igen Salzsäure suspendiert, mit Eis auf ca. 10°C gekühlt und mit 34 Teilen einer 30%igen Nitritlösung diazotiert.

20,7 Teile 1-Naphthylamin werden in 80 Teilen Wasser bei 80°C emulgiert. Die heiße Emulsion wird langsam zur Diazotierung getropft. Gleichzeitig wird mit Eis die Temperatur $\leq$ 20°C gehalten. Die Kupplung ist nach 2 Stunden beendet. Diese Kupplung wird mit 10 Teilen einer 30%igen Salzsäure versetzt, mit einer 30%igen Nitritlösung weiterdiazotiert und langsam zu einer Suspension aus 67,8 Teilen 6-[2',4'-difluor-5'-chlor-6'-pyrimidyl]-amino-1-naphthol-4,8-disulfonsäure in ca. 2000 Teilen Wasser getropft. Gleichzeitig wird mit Natronlauge der pH-Wert $\geq$ 7 gehalten. Der entstandene Farbstoff ist ausgefallen und kann ohne Salz isoliert werden. Man erhält ca. 500 Teile Farbstoffpaste, die in 2000 Teilen Wasser verrührt werden. Nacheinander wird mit 36 Teilen Kupfersulfat, 100 Teilen Harnstoff und 11 Teilen Lithiumcarbonat versetzt. Anschließend werden 350 Teile einer 3,5%igen Wasserstoffperoxid-Lösung langsam zugetropft. Nach beendeter oxidativer Kupferung wird mit Salz isoliert und die Farbstoffpaste im Vakuum getrocknet. Nach Mahlen erhält man ein dunkles Farbstoffpulver, das Baumwolle aus langer Flotte in blaugrünen Tönen anfärbt. Der Farbstoff entspricht in Form der freien Säure folgender Formel:

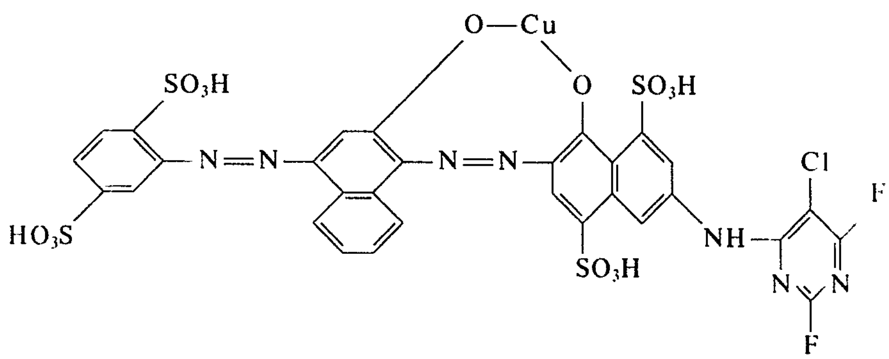

Bluish Green (Dull) No 40*)

*) Nach »Color Index Hue Indication Chart«

Ersetzt man Anilin-2,5-disulfonsäure aus Beispiel 1 durch die Tabelle 1, Kolonne 1 genannten Diazokomponenten und 2,4,6-Trifluor-5-chlor-pyrimidin aus Beispiel 1 durch die in Tabelle 1, Kolonne 2, genannten fluorhaltigen Heterocyclen, so erhält man weitere wertvolle Reaktivfarbstoffe. Die Spezifikation der Nuance in Kolonne 3 und 4 erfolgte nach »Color Index Hue Indication Chart«.

Tabelle 1

| Beispiel Nr. | Diazokomponenten | Fluorhaltige Heterocyclen | Permissible Hue Term*) | Indicator Number*) |
|---|---|---|---|---|
| 2 | 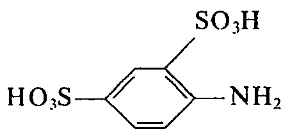 | 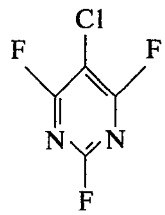 | Bluish Green (Dull) | 40 |
| 3 | 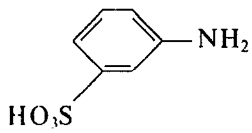 | desgl. | desgl. | 40 |
| 4 | 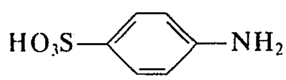 | desgl. | desgl. | 40 |
| 5 | 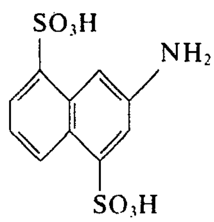 | desgl. | desgl. | 41 |
| 6 | 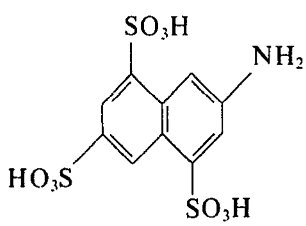 | desgl. | desgl. | 41 |
| 7 | 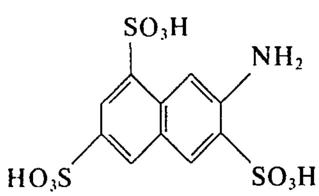 | desgl. | desgl. | 41 |
| 8 | 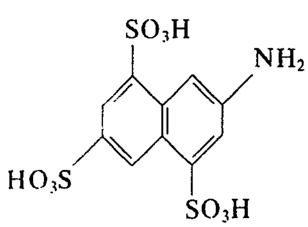 | 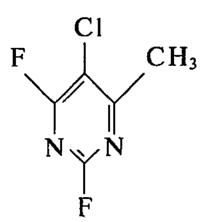 | desgl. | 41 |
| 9 | 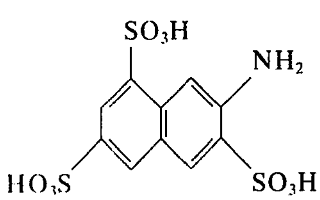 | desgl. | desgl. | 41 |

Fortsetzung

| Beispiel Nr. | Diazokomponenten | Fluorhaltige Heterocyclen | Permissible Hue Term*) | Indicator Number*) |
|---|---|---|---|---|
| 10 | 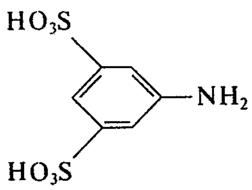 | 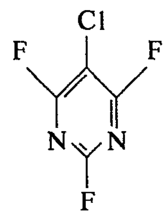 | Bluish Green (Dull) | 40 |
| 11 | 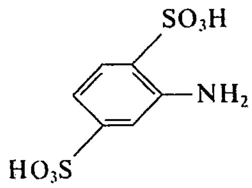 | 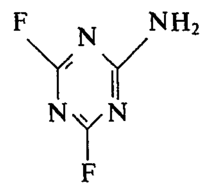 | desgl. | 40 |
| 12 | 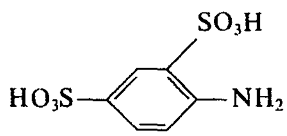 | 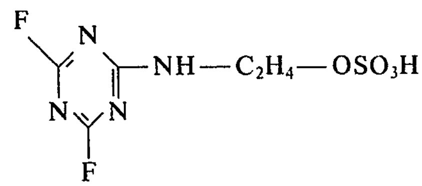 | desgl. | 40 |
| 13 | 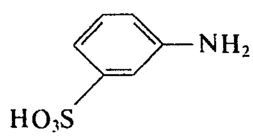 | desgl. | desgl. | 40 |
| 14 | 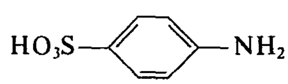 | 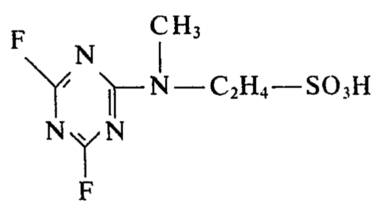 | desgl. | 40 |
| 15 | 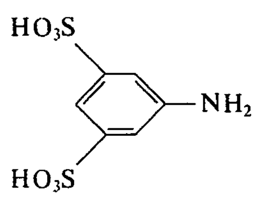 | 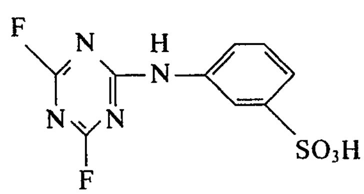 | desgl. | 40 |
| 16 | 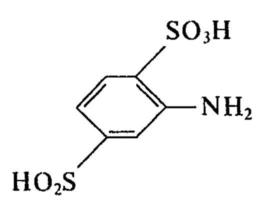 | 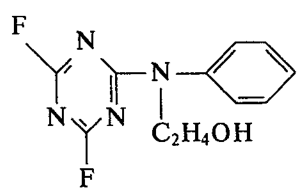 | desgl. | 40 |
| 17 | 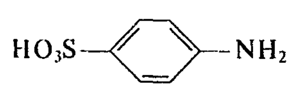 | 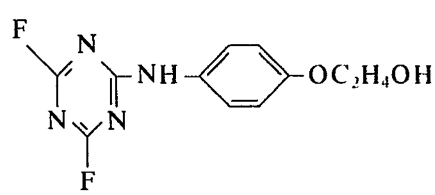 | desgl. | 40 |

Fortsetzung

| Beispiel Nr. | Diazokomponenten | Fluorhaltige Heterocyclen | Permissible Hue Term*) | Indicator Number*) |
|---|---|---|---|---|
| 18 | 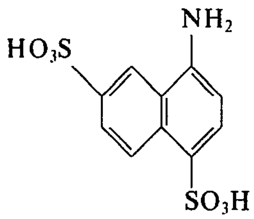 | 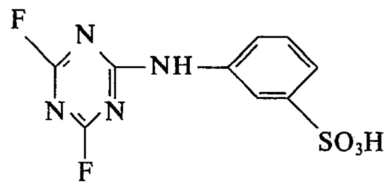 | Bluish Green (Dull) | 41 |
| 19 | 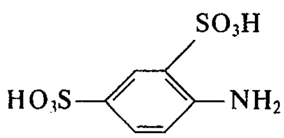 | 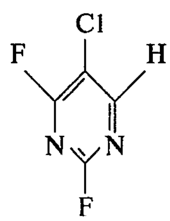 | desgl. | 40 |
| 20 | 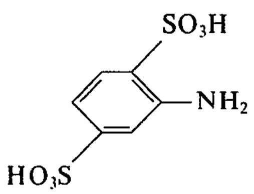 | 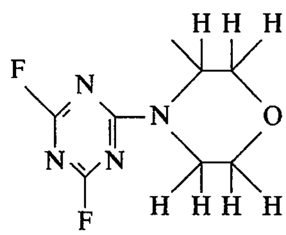 | desgl. | 40 |

*) Nach »Color Index Hue Indication Chart«.

**Patentansprüche**

1. Reaktivfarbstoffe der allgemeinen Formel

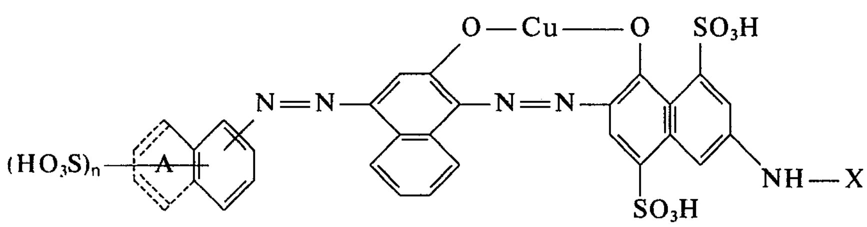

(I)

worin

X für den Rest eines gegebenenfalls weiter substituierten faserreaktiven Fluorheterocyclus steht,
n 1, 2 oder 3 ist und der Benzol- bzw. Naphthalinkern A weitere Substituenten tragen kann.

2. Reaktivfarbstoffe der Formel

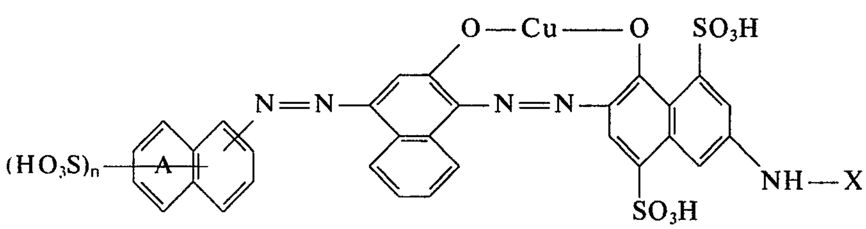

(II)

worin

X die in Anspruch 1 angegebene Bedeutung besitzt,
n für 2 oder 3 steht,

der Naphthalinring A die Azobrücke in 1- oder 2-Stellung trägt und gegebenenfalls weiter durch $C_1$—$C_4$-Alkoxy oder Hydroxy substituiert ist.

3. Reaktivfarbstoffe der Formel

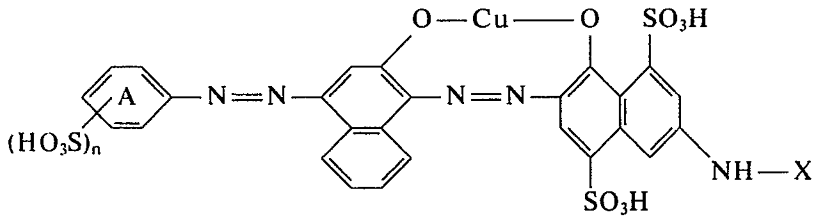

(III)

worin

X die in Anspruch 1 angegebene Bedeutung besitzt,
n für 1 oder 2 steht,

der Benzolring A gegebenenfalls weiter durch Aminosulfonyl, Carboxy, Aminocarbonyl, $C_1$—$C_4$-Alkoxycarbonyl, $C_1$—$C_4$-Alkyl, $C_1$—$C_4$-Alkoxy, Halogen, $C_1$—$C_4$-Alkylcarbonylamino, Benzoylamino, gegebenenfalls substituierte Phenyl-, Phenylazo- oder Naphthylazo- oder gegebenenfalls substituierte 2-Benzothiazoylgruppen substituiert sein kann.

4. Reaktivfarbstoffe gemäß Anspruch 1 bis 3, dadurch gekennzeichnet, daß X für einen gegebenenfalls weitersubstituierten Fluorheterocyclus der Pyridin-, Pyrimidin-, Triazin-, Chinolin-, Phenanthridin-Reihe handelt.

5. Reaktivfarbstoffe gemäß Anspruch 1 bis 4, dadurch gekennzeichnet, daß X eine der folgenden Bedeutungen hat:

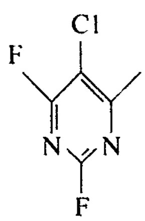

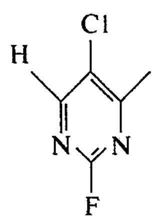

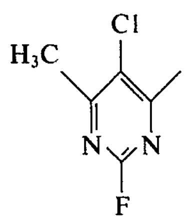

oder

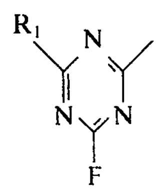

wobei $R_1$ für einen Substituenten steht.

6. Verfahren zur Herstellung von Farbstoffen der allgemeinen Formel

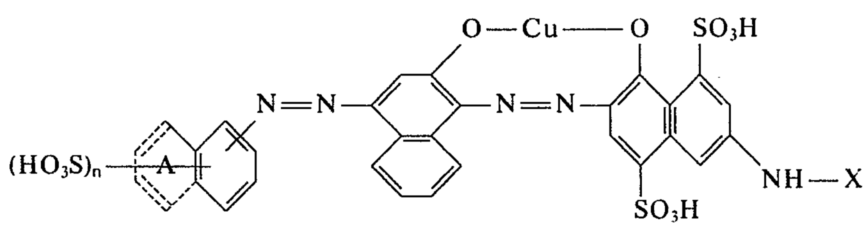

(I)

worin

X für den Rest eines gegebenenfalls weitersubstituierten faserreaktiven Heterocyclus steht,
n 1, 2 oder 3 und der Benzol- bzw. Naphthalinkern A weitere Substituenten tragen kann,

dadurch gekennzeichnet, daß man Verbindungen der Formel

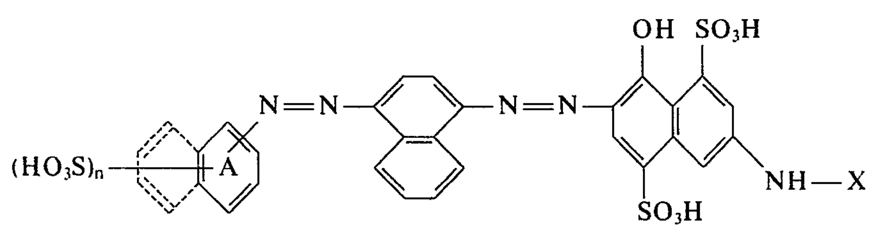

(XI)

worin

X und n die oben genannte Bedeutung besitzen,
einer oxydativen Kupferung unterwirft.

7. Verwendung von Farbstoffen gemäß Anspruch 1 bis 5 zum Färben und Bedrucken von hydroxyl- und/oder stickstoffhaltigen Materialien.

8. Mit Farbstoffen gemäß Anspruch 1 bis 5 gefärbtes oder bedrucktes Gewebe.

## Claims

1. Reactive dyestuffs of the general formula

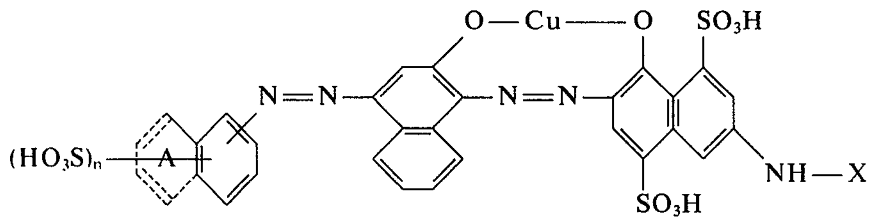

(I)

wherein

X represents the radical of an optionally further substituted, fibre-reactive fluoroheterocyclic structure,
n is 1, 2 or 3

and the benzene or naphthalene nucleus A can carry further substituents.

2. Reactive dyestuffs of the formula

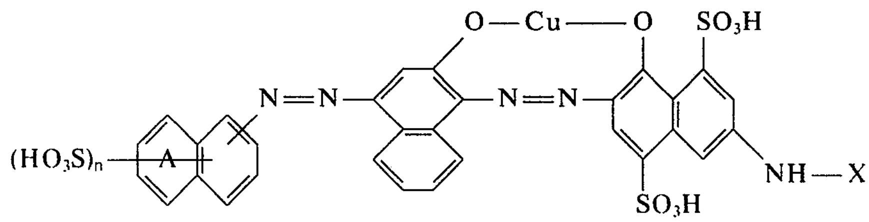

(II)

wherein

X has the meaning given in Claim 1,
n represents 2 or 3 and

the naphthalene ring A carries the azo bridge in the 1- or 2-position and is optionally further substituted by $C_1$—$C_4$-alkoxy or hydroxyl.

3. Reactive dyestuffs of the formula

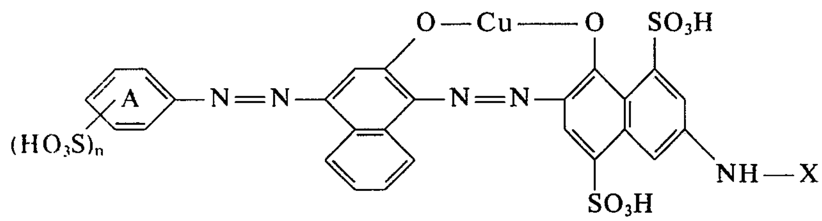

(III)

wherein

X has the meaning given in Claim 1,
n represents 1 or 2 and

the benzene ring A can optionally be further substituted by aminosulphonyl, carboxyl, aminocarbonyl, $C_1$—$C_4$-alkoxycarbonyl, $C_1$—$C_4$-alkyl, $C_1$—$C_4$-alkoxy, halogen, $C_1$—$C_4$-alkylcarbonylamino, benzoylamino, optionally substituted phenyl, phenylazo or naphthylazo groups or optionally substituted 2-benzothiazolyl groups.

4. Reactive dyestuffs according to Claim 1 to 3, characterised in that X acts for an optionally further substituted fluoroheterocyclic structure of the pyridine, pyrimidine, triazine, quinoline or phenanthridine series.

5. Reactive dyestuffs according to Claim 1 to 4, characterised in that X has one of the following meanings:

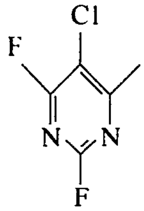 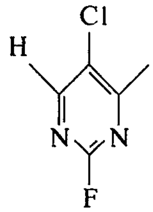 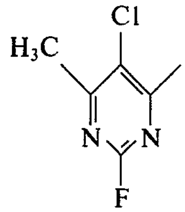 or 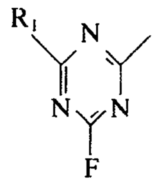

in which $R_1$ represents a substituent.

6. Process for preparing dyestuffs of the general formula

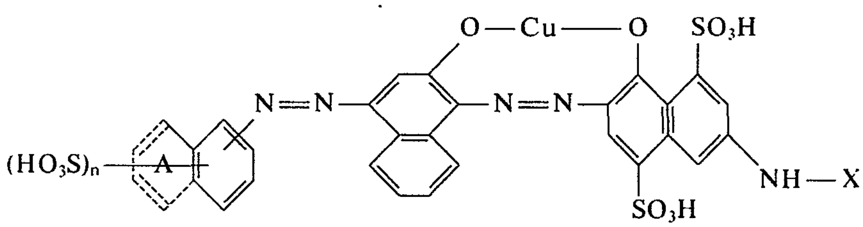

(I)

wherein

X represents the radical of an optionally further substituted, fibre-reactive heterocyclic structure,
n = 1, 2 or 3 and the benzene or naphthalene nucleus A can carry further substituents,

characterised in that compounds of the formula

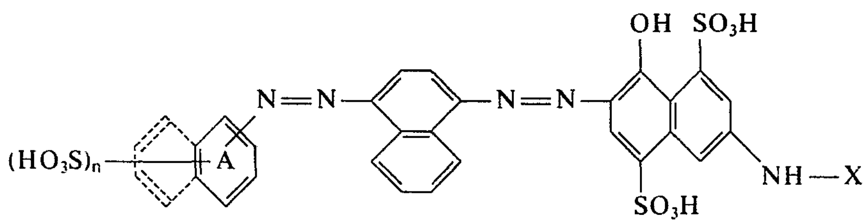

(XI)

wherein
X and n have the abovementioned meaning
are subjected to oxidative coppering.

7. Use of dyestuffs according to Claim 1 to 5, for dyeing and printing hydroxyl- and/or nitrogen-containing materials.

8. Fabric dyed or printed with dyestuffs according to Claim 1 to 5.

**Revendications**

1. Colorants réactifs de formule générale

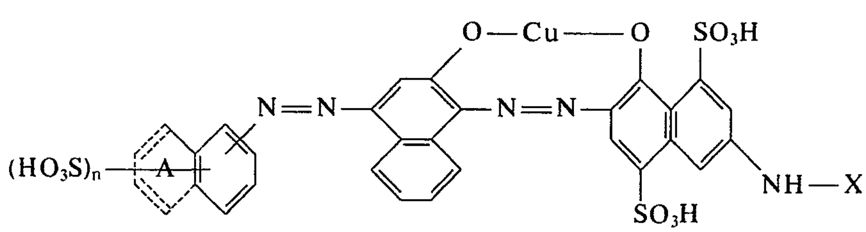

(I)

dans laquelle

X représente le reste d'un hétérocycle fluoré réactif envers la fibre, encore substitué le cas échéant,
n a la valeur 1, 2 ou 3 et le noyau benzénique ou naphtalénique A peut porter d'autres substituants.

2. Colorants réactifs de formule

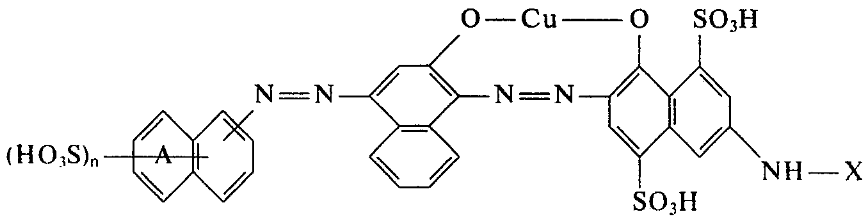

(II)

dans laquelle

X a la définition indiquée dans la revendication 1,
n a la valeur 2 ou 3,

le noyau naphtalénique A porte le pont azo en position 1 ou 2 est éventuellement encore substitué par un groupe alkoxy en $C_1$ à $C_4$ ou hydroxy.

3. Colorants réactifs de formule

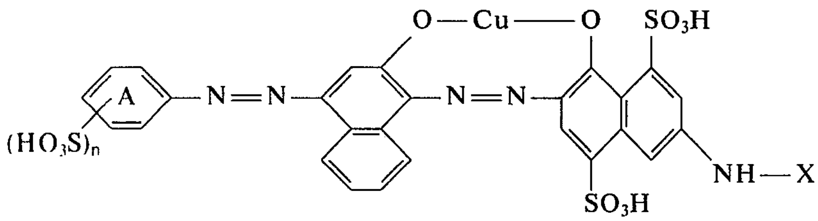

(III)

dans laquelle

X possède la définition indiquée dans la revendication 1,
n a la valeur 1 ou 2,

le noyau benzénique A peut éventuellement être substitué encore par des groupes aminosulfonyle, carboxy, aminocarbonyle, (alkoxy en $C_1$ à $C_4$)carbonyle, alkyle en $C_1$ à $C_4$, alkoxy en $C_1$ à $C_4$, halogéno, (alkyle en $C_1$ à $C_4$)carbonylamino, benzoylamino, des groupes phényle, phénylazo ou naphtylazo éventuellement substitués ou des groupes 2-benzothiazoyle éventuellement substitués.

4. Colorants réactifs suivant les revendications 1 à 3, caractérisés en ce que X représente un hétérocycle fluoré éventuellement encore substitué, de la série de la pyridine, de la pyrimidine, de la triazine, de la quinoléine ou de la phénanthridine.

5. Colorants réactifs suivant les revendications 1 à 4, caractérisés en ce que X a l'une des définitions suivantes:

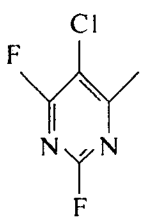 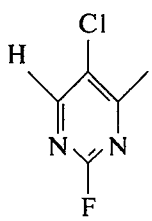 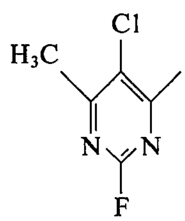 ou 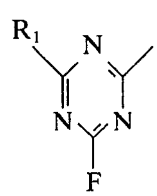

où $R_1$ représente un substituant.

6. Procédé de production de colorants de formule générale

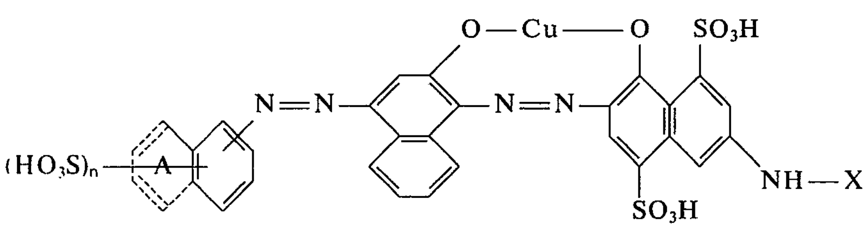

(I)

dans laquelle

X représente le reste d'un hétérocycle réactif envers la fibre éventuellement encore substitué,
n a la valeur 1, 2 ou 3 et le noyau benzénique ou naphtalénique A peut porter d'autres substituants,

caractérisé en ce qu'on soumet des composés de formule

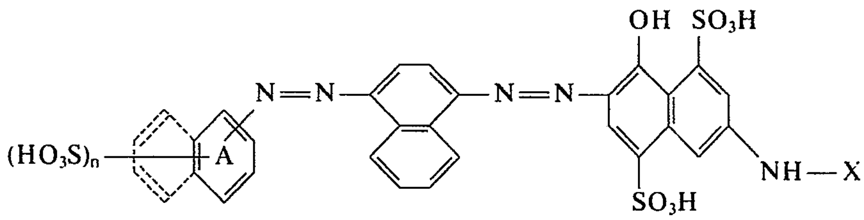

(XI)

dans laquelle
X et n ont la définition indiquée ci-dessus,
à une introduction de cuivre par oxydation.

7. Utilisation de colorants suivant les revendications 1 à 5 pour la teinture et l'impression de matières portant des groupes hydroxyle et/ou contenant de l'azote.

8. Un tissu teint ou imprimé avec des colorants suivant les revendications 1 à 5.